Europäisches Patentamt

European Patent Office

Office européen des brevets

(11) Veröffentlichungsnummer: **0 141 392**
**B1**

(12) **EUROPÄISCHE PATENTSCHRIFT**

(45) Veröffentlichungstag der Patentschrift: **14.03.90**

(51) Int. Cl.⁵: **G 03 B 27/58**, G 03 B 27/72

(21) Anmeldenummer: **84112980.2**

(22) Anmeldetag: **27.10.84**

(54) **Fotografisches Rollenkopiergerät mit einer Einfädelvorrichtung.**

(30) Priorität: **04.11.83 DE 3339975**

(43) Veröffentlichungstag der Anmeldung:
**15.05.85 Patentblatt 85/20**

(45) Bekanntmachung des Hinweises auf die
Patenterteilung:
**14.03.90 Patentblatt 90/11**

(84) Benannte Vertragsstaaten:
**CH DE FR GB IT LI**

(56) Entgegenhaltungen:
**EP-A-0 025 078**
**DE-A-2 244 960**
**US-A-4 108 548**
**US-A-4 452 529**

(73) Patentinhaber: **Agfa-Gevaert AG**
**D-5090 Leverkusen 1 (DE)**

(72) Erfinder: **Nitsch, Wilhelm, Dr.**
**Werdenfelsstrasse 39**
**D-8000 München 70 (DE)**

Courier Press, Leamington Spa, England.

**Beschreibung**

Die Erfindung betrifft ein fotografisches Rollenkopiergerät nach dem Oberbegriff des Anspruchs 1.

Ein derartiges Rollenkopiergerät ist z.B. aus der deutschen Auslegeschrift 22 44 960 bekannt, in der Klappen für das Verschließen der Belichtungsöffnung für die Dauer des Einfädelvorganges beschrieben sind, die zusätzlich in Belichtungspausen die Funktion eines Hilfsverschlusses übernehmen können.

Diese Funktion des Hilfsverschlusses schließt jedoch von vornherein die Benutzung dieser Klappe als Hilfsmittel zur Herstellung einer Testbelichtung aus.

Aufgabe der Erfindung ist es, in dem Rollenkopiergerät eine Möglichkeit zu schaffen, eine genaue Testbelichtung auf das Kopiermaterial aufzubringen, um sowohl das Kopiergerät als auch eventuell das Gerät für die anschließende Nachbehandlung des Schichtträgers zu überprüfen.

Diese Aufgabe wird gelöst durch die im Anspruch 1 beschriebene Erfindung.

Die Anordnung eines Testnegativs in der Einfädelklappe des Rollenkopiergerätes ist eine außerordentlich kostengünstige Lösung, da diese Klappe für die Einfädelfunktion ohnedies vorhanden ist. Darüber hinaus bietet sie eine weitere Reihe von Vorteilen. Durch die Kontaktbelichtung wird unabhängig von dem jeweiligen Abbildungsmaßstab immer eine Testkopie gleicher Größe erzeugt. Die unterschiedlichen Abbildungsmaßstäbe können nach einer Ausgestaltung der Erfindung rechnerisch bei der Bemessung der Belichtungszeit oder -intensität berücksichtigt werden. Schließlich kann durch die Programmierung des Einfädelvorgangs automatisch bei jedem Einfädelvorgang am Beginn des unbelichteten Bereiches des Kopiermaterials eine Testkopie aufbelichtet werden, die dann zur regelmäßigen Kontrolle des Gerätes nutzbar ist.

Weitere Einzelheiten und Vorteile der Erfindung ergeben sich aus den Unteransprüchen im Zusammenhang mit der Beschreibung eines Ausführungsbeispiels, das anhand der Zeichnung eingehend erläutert ist. Es zeigen:

Fig. 1 eine schematische Darstellung eines Rollenkopiergerätes mit einer erfindungsgemäßen Einfädelklappe,

Fig. 2 den Bereich der Kopiermaterialbühne mit Einfädelklappe im Grundriß und

Fig. 3 die Einfädelklappe in der Seitenansicht.

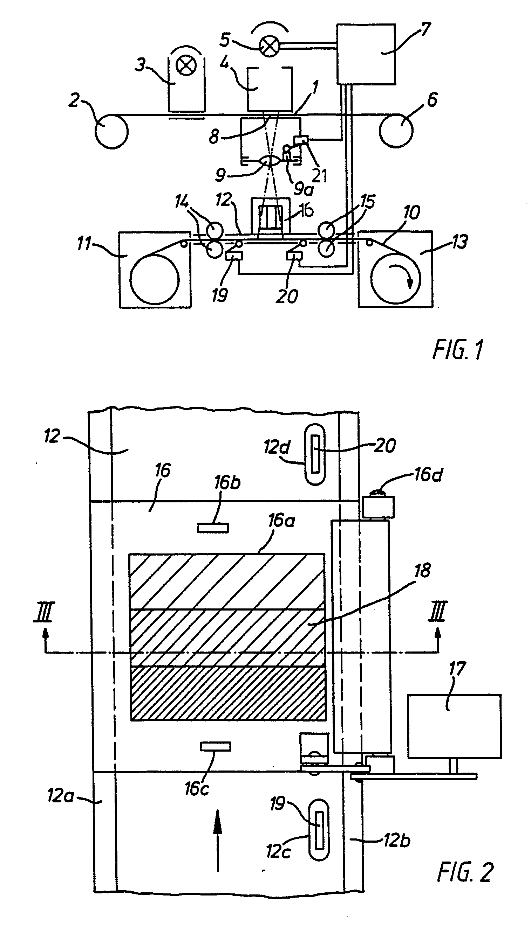

In der schematischen Darstellung eines Rollenkopiergerätes gemäß Fig. 1 ist mit 1 die Vorlagenbühne bezeichet, über die ein auf einer Rolle 2 aufgerollter Film vorbei an einer Meßstation 3, einer Kopierstation 4 mit Kopierlichtquelle 5 zu einer Aufwickelspule 6 gespult wird. Die Belichtungszeit wird aufgrund der Meßergebnisse an der Meßstation 3 durch einen Belichtungsrechner 7 für die Kopierlichtquelle 5 bzw. einen nicht dargestellten Verschluß vorgegeben. Die im Kopierfenster 8 stehende Kopiervorlage wird durch ein Objektiv 9 abgebildet auf einen bandförmigen, lichtempfindlichen Schichtträger 10, der von einer Abwickelkassette 11 über eine Papierbühne 12 in eine Aufwickelkassette 13 gespult wird. Hierfür sind zwei Transportrollenpaare 14 und 15 schematisch angedeutet.

An der Platine des Objektives 9 ist eine Nocke 9a angebracht, die ein Signal über das jeweils verwendete Objektiv an einen Fühler 21 gibt, der mit dem Rechner 7 in Verbindung steht. Auf diese Weise ist im Rechner sowohl zur Steuerung der Kopierbelichtungszeiten als auch für später noch zu beschreibende Zwecke die Information über den Abbildungsmaßstab des Objektivs vorhanden.

Bei einem Objektiv mit stufenlos veränderbarer Brennweite kann die Information über den Abbildungsmaßstab über ein mit einem Stellglied gekuppeltes Potentiometer hergeleitet werden.

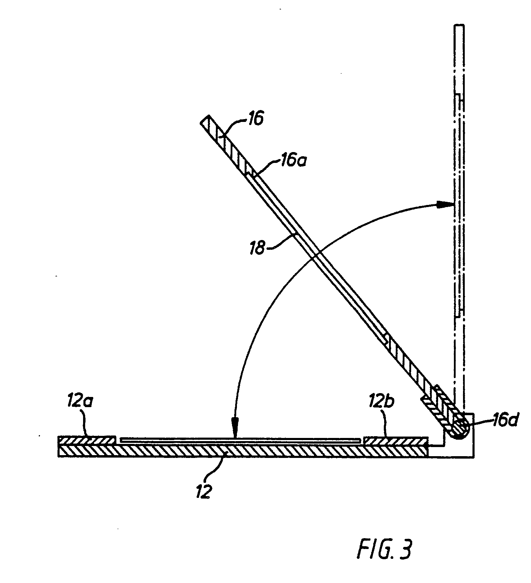

Einzelheiten der Papierbühne 12 und einer Vorrichtung zum Einfädeln des Kopiermaterials 10 ergeben sich insbesondere aus den Figuren 2 und 3. Die Papierbühne 12 besteht aus einer Papierauflagefläche und zwei Seitenführungen 12a und 12b, die ein seitliches Auswandern der durch die Rollenpaare 14, 15 straff gehaltenen Bahn verhindern.

Jeweils beim Ende einer Papierrolle in der Abwickelkassette 11 ist ein neuer Einfädelvorgang des Kopiermaterials durch die Rollenpaare 14, 15 bis zur Aufwickelkassette 13 erforderlich. Spätestens mit dem Einlaufen des Bandanfangs zwischen die Transportrollen 14 wird eine Einfädelklappe 16 geschlossen, die um eine parallel zur Transportrichtung verlaufende Achse 16d von einer Ruhestellung senkrecht zur Papierebene in eine Arbeitsstellung direkt über der Papierauflage 12 verschwenkbar ist. In der geschlossenen Stellung bildet die Klappe 16 zusammen mit der Papierauflage 12 und den beiden Seitenführungen 12a und 12b einen ca. 1,5 mm hohen Kanal, durch den der Papieranfang mittels der Transportrollen 14 vorgeschoben wird.

Die Ruhestellung der Klappe 16 ist in Fig. 3 gestrichelt gezeichnet, die ausgezogen gezeichnete Klappe befindet sich gerade auf dem Weg in die Arbeitsstellung, in der sie in Fig. 2 gezeigt ist. Zur Bewegung der Klappe 16 ist ein Drehmagnet 17 vorgesehen, der entweder an der Achse oder unmittelbar an der Klappe selbst angreifen kann. Die Steuerung des Magneten 17 erfolgt ebenfalls durch den Rechner 7, wenn dieser das Programm für das Einfädeln aufruft.

Die Klappe 16 trägt mittig eine Öffnung 16a, die sich nahezu über einen großen Teil der kleinsten zu verarbeitenden Papierbreite erstreckt. Ferner weist sie zwei Öffnungen 16b und 16c in Schlitzform auf, die sich in der Position anderer aufbelichteter Schnittmarken befinden.

In der Öffnung 16a, gehalten durch einen Rand und mit diesem verklebt, befindet sich eine Testvorlage 18 für sogenannte Testbelichtungen, die zur Kontrolle des Kopiergerätes dienen. Sie kann z.B. aus drei Graufiltern abgestufter Dichte bestehen, die durch eine empirisch bestimmte Kopierlichtmenge im Kontakt auf das Kopiermaterial aufbelichtet werden. Nachdem die Flächen der Testvorlagen und der Testbelichtungen verhältnismäßig groß sind, beeinflußt der Abstand zwischen Testvorlage und Papier die Güte der Testbelichtung praktisch nicht; so können die Testvorlagen auch als auf der Klappenoberseite befestigte Masseglasfilter ausgebildet sein.

Nach dem Entwickeln des Kopiermaterialstreifens erfolgt am Anfang oder am Ende der Rolle der Schnitt an den aufbelichteten Marken in Zuordnung zu den Schlitzen 16b bzw. 16c, so daß eine Normkopie mit genormten Abmessungen und ebenfalls genau bekannter Lage der Filterbilder anfällt, die so in ein Densitometer direkt eingeschoben werden kann. Dessen Meßwerte können in z.B. aus der deutschen Offenlegungsschrift 29 11 566 bekannter Weise unmittelbar ausgewertet werden zur Kontrolle des Kopiergerätes und zu dessen Nachjustierung.

In der Papierauflage 12 sind ferner in Transportrichtung vor und hinter dem Bereich der Klappe 16 Öffnungen 12c und 12d angebracht, durch die Fühler für das Kopiermaterial, die Arme von Mikroschaltern 19 und 20 hindurchragen.

Der Fühler 19 liefert ein Signal, wenn das Ende einer Papierrolle kurz vor der Kopierstation steht, während der Fühler 20 ein Signal liefert, wenn der vorgeschobene Anfang einer neuen Papierbahn die Klappe 16 durchlaufen hat.

Die Wirkungsweise der beschriebenen Einrichtung ist je nach Automatisierungsgrad unterschiedlich. Bei der einfacheren Ausführung kann die Betätigung des Drehmagneten 17 von Hand gesteuert werden und mit dem Einlaufen des Papieranfangs unter die Klappe 16 von Hand eine Testkopie ausgelöst werden. Die dafür erforderliche Belichtungszeit ohne Negativ in der Negativbühne 8 kann von Hand eingestellt sein oder auch im Printer gespeichert sein.

Es ist jedoch auch ohne weiteres machbar, daß das Kopiergerät mit dem Programm für das Einfädeln einer neuen Kopiermaterialrolle nach dem Anschließen einer neuen Kassette 11 automatisch diese Testbelichtung ablaufen läßt. Darin ist auch eingeschlossen, daß die Kopierlichtmenge unabhängig von dem jeweiligen Abbildungsmaßstab, geliefert von dem Fühler 21, durch Variation der Belichtungszeit oder der Lichtintensität konstant gehalten wird.

## Patentansprüche

1. Fotografisches Rollenkopiergerät mit einer Einfädelvorrichtung für das fotografische Kopiermaterial, umfassend wenigstens eine Antriebsvorrichtung und eine Führungsvorrichtung für das vorgeschobene Bandmaterial, die im Bereich eines Kopierfensters unterbrochen und für die Dauer des Einfädelvorgangs mittels einer einschwenkbaren Klappe zeitweise verschließbar ist, dadurch gekennzeichnet, daß zur Erstellung von Testkopien in der einschwenkbaren Klappe (16) eine Öffnung (16a) vorgesehen ist, in welche eine im Kontaktverfahren aufbelichtbare Testvorlage (18) einsetzbar ist und daß die Belichtungssteuervorrichtung (7) so ausgebildet ist, dap sie zur Erstellung der Testkopie bei eingeschwenkter Klappe (16) ohne Vorlage in der Negativbühne (8) die eingeschwenkte Testvorlage mit einer empirisch festgelegten Kopierlichtmenge beaufschlagt.

2. Vorrichtung nach Anspruch 1, dadurch gekennzeichnet, daß die Klappe (16) wenigstens einen Schlitz (16b, 16c) zur Einbelichtung einer Schneidmarkierung aufweist.

3. Vorrichtung nach Anspruch 1 oder 2, dadurch gekennzeichnet, daß am Weg des Bandmaterials Fühler (19, 20), insbesondere Mikroschalter, für das Bandende und für den Bandanfang vorgesehen sind, die im Steuerstromkreis für die Testbelichtung liegen.

4. Vorrichtung nach einem der vorangehenden Ansprüche, dadurch gekennzeichnet, daß für die Bemessung der Kopierlichtmengen ein Rechner (7) vorgesehen ist mit einem Speicher für die für die Testkopie erforderliche Lichtmenge und daß zur Berücksichtigung unterschiedlicher Abbildungsmaßstäbe ein Signalgeber (21) für den wirksamen Abbildungsmaßstab mit dem Rechner verbunden ist.

## Revendications

1. Duplicateur photographique à rouleaux comportant un dispositif de chargement du matériel photographique de reproduction, comprenant pour faire avancer la bande de matériel au moins un dispositif d'entraînement et un dispositif de guidage, qui est interrompu dans la zone d'une fenêtre de reproduction et pouvant être obturé temporairement pour la durée du processus de chargement au moyen d'un volet pivotant, caractérisé en ce qu'il est prévu dans le volet pivotant (16) pour la réalisation de copies d'essai une ouverture (16a) dans laquelle peut être inséré un modèle d'essai (18) pouvant être éclairé dans l'opération de contact et en ce que le dispositif de commande d'exposition (7) est constitué de telle sorte que, sans modèle dans la fenêtre (8) du négatif, il envoie sur le modèle d'essai pivoté une quantité de lumière d'exposition déterminée empiriquement pour la réalisation de la copie d'essai lorsque le volet (16) est rabattu par pivotement.

2. Duplicateur selon la revendication 1, caractérisé en ce que le volet (16) comporte au moins une fente (16b, 16c) pour l'illumination d'un repère de coupe.

3. Duplicateur selon la revendication 1 ou 2, caractérisé en ce que des palpeurs (19, 20), des microrupteurs notamment, sont prévus sur le trajet du matériel en bande pour la fin et le début de bande, palpeurs qui se situent dans le circuit de commande pour l'exposition d'essai.

4. Duplicateur selon l'une des revendications précédentes, caractérisé en ce qu'il est prévu, pour la mesure des quantités de lumière d'exposition, un calculateur (7) qui comporte une mémoire pour la quantité de lumière nécessaire pour la copie d'essai et en ce que pour la prise en compte de différentes échelles de reproduction, un palpeur (21) est relié au calculateur pour l'échelle effective de reproduction.

## Claims

1. Photographic roll-type copier having a threading apparatus for the photographic copying material, comprising at least one drive apparatus and a guide apparatus for the advanced tape material, which guide apparatus is interrupted in the region of a copying window and can be temporarily closed for the duration of the threading process by means of a pivotable flap, characterised in that, for producing test copies, an orifice (16a), into which a test copy (18) exposable by the contact method can be inserted, is provided in the pivotable flap (16), and that the exposure control apparatus (7) is designed in such a way that, for production of the test copy, with the flap (16) pulled in and without a copy in the negative support (8), it exposes the swivelled-in test copy to an empirically determined quantity of light for copying purposes.

2. Apparatus according to Claim 1, characterised in that the flap (16) has at least one slot (16b, 16c) for imprinting a cutting mark during exposure.

3. Apparatus according to Claim 1 or 2, characterised in that sensors (19, 20), in particular microswitches, for the tape end and for the beginning of the tape are provided along the path of the tape material, the said sensors being in the control circuit for the test exposure.

4. Apparatus according to any of the preceding Claims, characterised in that a computer (7) having a memory for the quantity of light required for the test copy is provided for measuring the quantities of light for copying, and that, to take into account different lateral amplifications, a signal generator (21) for the effective lateral amplification is connected to the computer.

FIG. 1

FIG. 2

FIG. 3